# EUROPEAN PATENT APPLICATION

(11) **EP 3 324 303 A1**
(43) Date of publication of application: **23.05.2018**
(21) Application number: 16199776.2
(22) Date of filing: 21.11.2016
(51) Int. Cl.: G06F 17/30

(54) **METHOD FOR SEGMENTING AND INDEXING FEATURES FROM MULTIDIMENSIONAL DATA**

(71) Applicant: Université de Lausanne, 1011 Lausanne (CH)
(72) Inventor: GARBINATO, Benoît, 1066 Epalinges (CH); CHAPUIS, Bertil, 1012 Lausanne (CH); ANDRITSOS, Periklis, Toronto (CA)
(74) Representative: KATZAROV S.A.

(57) **Abstract**

The invention relates to a method for segmenting and indexing features from multidimensional data, said method comprising the steps of inputting (201) a sequence of tuples in a transformation process, first mapping (204) the tuple sequence to a sequence of hash sums with a rolling hash function, grouping (205) the sequence of tuple hash sums into a sequence of overlapping and contiguous sequences of n tuples hash sums, second mapping (206) of the resulting sequence of n tuples hash sums to a sequence of n-gram hash sums, and segmenting (207) the sequence of n-gram hash sums into chunks of tuples using a segmentation method selected in the group comprising at least one Content-Defined Chunking and Winnowing.

## Description

The present invention relates to a method and a system for indexing and finding similarities in sequences of tuples belonging to a potentially infinite alphabet, in other words, series of multi-dimensional data.

There is currently an unprecedented rise in the demand for multidimensional data sequence processing. A common need when processing sequences of multidimensional data, is to detect patterns and similarities in the flow of multidimensional items also called tuples.

A tuple is referred to as an atomic and meaningful multidimensional piece of information that should be preserved while handling the sequence. Tuples typically refer to sets of attributes, such as for example, but not exclusively, the coordinates of GPS locations, wherein each tuple for example includes a latitude, a longitude and a timestamp and/or an altitude.

Today, similarity search in multidimensional data rely on two key components: Spatial Indexing and Similarity measures. The first component generally relies on space-partitioning data structures, such as trees, which organize sequence of tuples in a multi-dimensional space. Bounding intervals on each dimensions are then used to query the data structure. These structures have a major drawback, as the number of dimensions increases, the ability of the data-structure to discriminate sequences of tuples decreases. The second component generally relies on similarity measures which are used to discriminate the retrieved sequences of tuples, which are characterized by the same bounding intervals. Among others, such similarity measures include classical Euclidean distance measures, dynamic time wrapping based measures or longest common subsequence based Measures.

Segmentation techniques are commonly used by file systems, network protocols, search engines and plagiarism detection software in order to detect similarities in sequences of bytes or encoded characters.

In the context of file systems and network protocols, a segmentation technique called chunking is often used in order to detect similarities in the data. By segmenting sequences of bytes into non-overlapping chunks, this technique can detect redundancies and reduce storage requirements, as well as network bandwidth. The size of the chunks, can be fixed or variable. Fixed-Size Chunking comes with a major drawback: when bytes are added at the beginning of a file, all the following chunk boundaries are shifted and the chunks that follow an insertion cannot be used for similarity detection anymore. Content-Defined chunking address this issues by detecting chunks of variable size using a rolling hash function. A rolling hash function could be described as a fixed size window that slides byte after byte over the sequence of data and produces hash sums at each positions. Chunks boundaries are identified by comparing the successive hash sums produced by the rolling hash function to some constant. If the hash sum is equal to the constant, then a chunk boundary is set, otherwise the next hash sum is produced and the process is repeated until a chunk boundary is found. The resulting boundaries resist to insertions and can be used to efficiently detect similarities in large collection of files.

In the context of search engines and plagiarism detection, a segmentation technique called n-gram is commonly used for detecting similarities in large corpus of documents. An n-gram corresponds to a contiguous sequence of n characters or n words in a text. By computing and indexing all the possible overlapping n-grams of text it becomes possible to search documents containing similarities. However, this approach comes at a high cost in terms of storage requirements and computing power. These requirements tends to increase with the factor n.

Still in the context of search engines and plagiarism detection in large corpus of documents, a segmentation technique called winnowing produces better results with similar guarantees. Given the sequence of n-grams produced for a text, the idea is to produce a sequence of hash sums. These hash sums are then winnowed using a sliding window algorithm and the position information of the remaining hash sums are used to highlight similarities.

In order to perform efficiently, the aforementioned segmentation techniques often rely on rolling hash functions. In order to produce hash sums, rolling hash functions typically map the consumed alphabet, made of bytes or characters, to random polynomials. By consequence, the alphabet must be of a finite size and known in advance. Due to this limitation, these techniques cannot be used on sequences of multidimensional data, which are characterized by very large or infinite alphabets.

The transformation process described in this invention address the aforementioned issue by discretizing multidimensional data and introducing a specialized fingerprinting scheme.

An aim of the present invention is to provide a method for efficiently segmenting sequences of multidimensional data.

Another aim of the present invention is to provide a method for efficiently extracting searchable features from sequences of tuples belonging to a potentially infinite alphabet.

These aims and other advantages are achieved with a transformation process according to the claims.

The present invention adopts a radically different approach for indexing multi-dimensional data than the traditional methods explained above. The idea consists in using an inverted index instead of a space-partitioning data structure. In its simplest form, an inverted index is composed of two parts: a dictionary of terms where each element points to a postings list. The extraction of terms from sequence of tuples is made possible thanks to a transformation process, which allows to segment any sequences of multidimensional data. The hash sums of the resulting segments are then used as terms in the inverted index. The identifiers of the sequence of tuples are used as items of the postings lists.

In general, the invention relates to a method which handle sequences of tuples and produces segments in order to build an inverted index. Similarly, when searching the index, segments are extracted from a query which also consists in a sequence of tuples. These segments are then used to find similar sequences in an inverted index. The method comprises a transformation process made of several steps. Among them, a specialized fingerprinting step handles sequence of tuples and comprises three key actions: mapping tuples to hash sums; grouping hash sums into n-grams; mapping n-grams to hash sums. This step is not restricted to one specific implementation, but an optimized version, which uses a sliding window in order to produces n-gram hash sums is presented. The hash sums produced by the fingerprinting step can then be used with segmenting methods that include, but are not restricted to, content-defined chunking and winnowing.

As explained above, a tuple is referred to as an atomic multidimensional piece of information. Furthermore, an alphabet is referred to the set of all possible tuples and a sequence is referred to a set of tuples that relate to each other and follow a particular order. For example, in the context of a location based service, a tuple would typically refer to the coordinates recorded by a GPS tracker (longitude, latitude, altitude), the alphabet would correspond to the set of all the possible coordinates and a sequence would refer to the ordered list of coordinates saved by the GPS tracker. The extent of the invention is not bound to sequences of GPS coordinates, however, this example will be used extensively to illustrate the mechanisms involved in the invention.

More particularly, the invention relates to a method for segmenting and indexing features from multidimensional data, the method comprising the steps of inputting a sequence of tuples in a transformation process, first mapping the tuple sequence to a sequence of hash sums with a rolling hash function, grouping the sequence of tuple hash sums into a sequence of overlapping and contiguous sequences of n tuples hash sums, second mapping of the resulting sequence of n tuples hash sums to a sequence of n-gram hash sums, segmenting the sequence of n-gram hash sums into chunks of tuples using a segmentation method selected in the group comprising at least one Content-Defined Chunking and Winnowing.

Advantageously, the hash function produces 32 bit or 64 bit integers.

According to a preferred embodiment, the rolling hash function slides over hashed tuples in order to produce fingerprints.

Advantageously, the segmenting method is configured to divide sequence of tuples into overlapping or non-overlapping chunks of fixed or variable sizes.

Preferably, the chunks are larger or equal to a minimal chunk size (min) and smaller or equal to a maximal chunk size (max).

According to a preferred embodiment, the predetermined condition is that the result of the first hash function (h) is a multiple of a predetermined divisor (d) (h mod d=0).

Advantageously, the method comprises a preliminary step of normalization of the sequence of tuples before the first mapping step.

Preferably, the step of normalizing comprises replacing each tuple of the sequence of tuples by a normalized tuple representative of a subspace comprising the tuple.

Advantageously, the method comprises a preliminary step of extracting meaningful data only from a sequence of multidimensional data in order to build the sequence of tuples.

Preferably, the sequence of tuples is a GPS trajectories and the tuples are GPS locations.

Advantageously, the longitude and latitude coordinates of each GPS location are replaced by the longitude and latitude coordinates of the center location of a user defined square in which the GPS location lies.

According to a preferred embodiment, the longitude and latitude coordinates of each GPS location are replaced by the coordinates of a road network thanks to map matching.

The invention will be better understood by reading the following description illustrated by the figures below, wherein
Figure 1 represents the transformation process according to a preferred embodiment of the present invention.
Figure 2 represents an exemplary architecture for a client-server system which indexes sequences of multidimensional data.
Figure 3 represents an inverted index according to an embodiment of the present invention.

The method of the invention can be used with any kind of sequential data but preferably applies to sequences of tuples, i.e. to sequences of multidimensional pieces of information, in order to extract features from these sequences.

In the embodiments, the tuples preferably belong to an infinite alphabet, i.e. to very large or infinite multidimensional space. This is for example the case when the tuples comprise elements that may be characterized by any real number, such as for example the coordinates produced by a GPS tracker, and/or an element that belongs to an infinite dimension, such as time, for example.

For the seek of clarity, the method of the invention is illustrated in the description above in relation with GPS trajectories. It can however be applied to any sequence of multidimensional data, such as for example other spatial and/or temporal data.

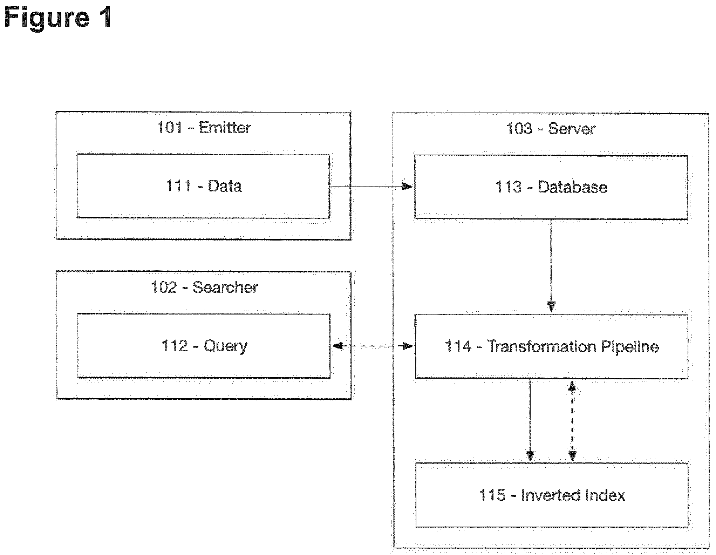

Figure 1 depicts an example architecture for a client-server system which indexes sequences of multidimensional data. Emitters 101 include any kind of devices, applications or systems which are able to produce sequences of multidimensional data. Emitters transmit data, which consists in sequences of tuples 111, to the server 103. These sequences of tuples can be stored in a database 113 before going through the transformation process 114 and being added in the inverted index 115. Searchers 102 include any kind of devices, applications or systems which can send a query to the server 103. Queries 112 also consists in sequences of tuples. However, instead of being stored, these sequence go directly through the transformation process 114 and the resulting segments are used to search for similar sequences of tuples in the inverted index 115.

In the context of a GPS tracker, emitters would correspond to sensors embedded in phones, cars or dedicated devices. At regular intervals, the GPS coordinates recorded by the trackers are sent to a server which stores them in a database. The sequence of saved coordinates corresponds to the trajectory followed by the tracker. The saved trajectories then go through the transformation process. The resulting segments correspond to characteristic sub-trajectories which belongs to the life-long trajectory of the tracker. These segments, as well as the identifiers of the tracker, are stored in the inverted index.

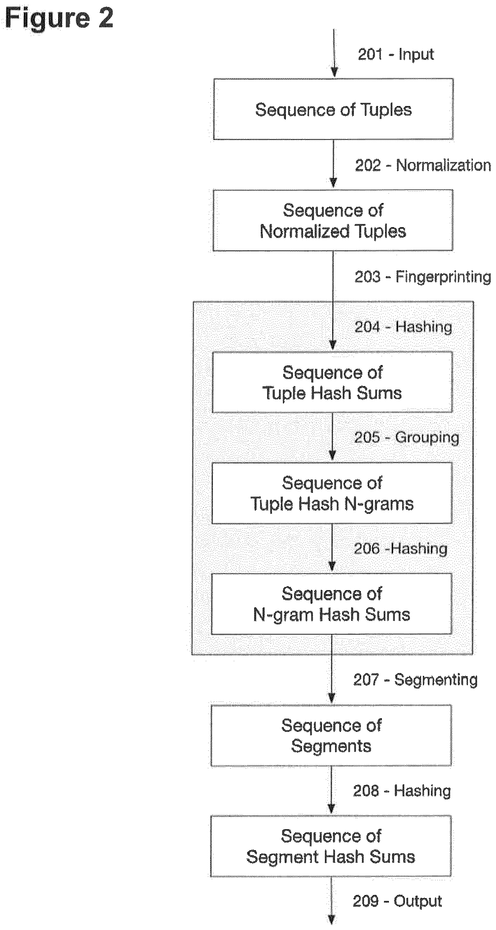

Figure 2 depicts the transformation process in more details. The input of the transformation process is a sequence of tuples 201. According to embodiments, and depending on the nature and/or on the source of the data, the sequences of multidimensional data to be processed according to the method of the invention may require some pre-processing such as for example data extraction and/or splitting into series of tuples. Data extraction for example includes extracting meaningful data only from the sequences of multidimensional data and discarding and/or deleting unnecessary data. Extracted data is then for example split into tuples, i.e. in series of meaningful multidimensional pieces of information, thereby resulting in sequences of tuples. In the context of a GPS tracker the sequence of tuples may correspond to pairs of longitude/latitude coordinates extracted from a binary trace file.

The sequence of tuples then goes through a normalization phase 202. Normalization aims at removing superficial differences, so that a match can occur on similar tuples, even though they are not identical. Tuple normalization for example comprises assigning a normalized value to each tuple, for example by rounding up or down the value of one or more elements of the tuple. Normalization can be viewed as a subdivision of the tuples' multidimensional space into subspaces, for example subspaces of equal sizes, and defining a normalized tuple to each sub-space. The normalized tuple for example corresponds to the coordinates of the center of the subspace. Each tuple of the sequences of tuples is normalized in that it is replaced by the normalized tuple representative of the subspace to which the tuple belongs. In the context of a GPS tracker, two trackers following the same route may record completely different sequences of coordinates. A normalization step relying solely on the process described above may not be sufficient, Consequently, in addition to space discretization, may include a step that maps the recorded GPS coordinates to the coordinates of an existing road network using map matching techniques.

The resulting sequence of normalized tuples then goes through the specialized fingerprinting phase 203 that produces hash sums. In contrasts with bytes and characters, tuples may belong to an infinite alphabet and it is not possible to pre-compute random irreducible polynomials for a vocabulary of an unknown size, i.e. for all possible chunks of tuples, the hash sums produced by hashing the tuples must be random enough to avoid collisions, i.e. such that a same hash sum h may not correspond to two or more different series of tuples.

In order to better understand the underlying mechanisms of phase 203, we decompose it into three actions 204, 205, 206. The sequence of tuples is first mapped 204 to a sequence of hash sums. Tuple hash sums consists in integers and the mapping can be achieved with any kind of hash function which spread integer sums evenly enough. Furthermore, the hash sums must be random enough to avoid as many collisions as possible, i.e. such that a same hash sum may not correspond to two or more different tuples. In most cases, a fast non-cryptographic hash function such as the Murmur Hash which produces 32 bit integers will give satisfactory results. However, the use of another strong hash function is possible within the frame of the invention. Furthermore, in data intensive cases, a fast custom hash functions, which assume some knowledge about the handled tuples, may be devised. The sequence of tuple hash sums is then grouped 205 into a sequence of overlapping and contiguous sequences of n tuples hash sums also called n-grams in this context. The resulting sequence of n-grams is then mapped 206 to a sequence of n-gram hash sums, which also consist in integers. In that case, a specialized hash function which hashes sets of integers into evenly distributed hash sums is required.

In consequence, and since computing hash sums for all the overlapping n-grams in a sequence can be computationally expensive, Algorithm 1 below depicts an efficient specialized fingerprinting method which slides over a sequence of tuples with a window of size n and produces a sequence n-gram hash sums.

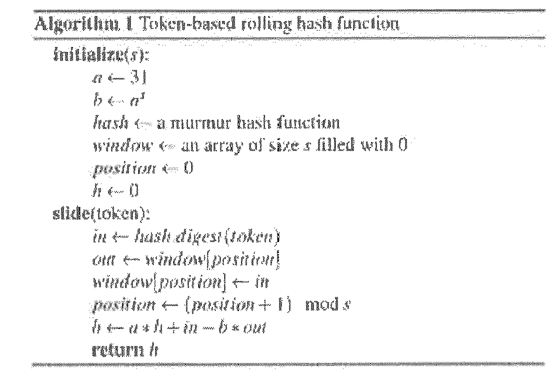

Except for the first hash sum, the computation of the hash sums at each position does not require to go through all the tuples contained in the window. The hash sum can be efficiently computed by performing simple operations on the previous hash sum. These operations involve the previous hash sum the tuple which goes out of the window and the tuple which comes in the window. Traditionally, rolling hash functions consume tuples which belong to an alphabet of a finite size, such as bytes or encoded characters. Predefined sets of random irreducible polynomials each of which corresponds to a tuple of the alphabet are used to produce evenly distributed hash sums. The method we propose rely on the hash sums of the tuples instead of predefined random irreducible polynomials and can therefore be used with tuples which belongs to an infinite alphabet. As described in Algorithm 1, the tuple hash sums may be computed inside the sliding window algorithm, but other variants are possible, since hashing may occur at an earlier stage of the transformation process.

The sequences of n-gram hash sums which result from the fingerprinting phase 203 then go through a segmenting phase 207. Such segmenting phase can be performed unrestrictedly using techniques such as content-defined chunking or winnowing. Regardless of the segmentation technique used, configuration parameters are generally set to produce segments, also called chunks, larger or equal to a minimal size (min) and smaller or equal to a maximal size (max). In addition, content-defined chunking would typically use a h mod d = 0 condition, where h is a hash sum coming from the fingerprinting phase and d is a predefined constant divisor, in order to find segment boundaries. Winnowing would typically rely on an additional grouping phase to find segment boundaries. The resulting sequences of segments are then hashed 208 with a strong hash function such as SHA in order to create the terms that will be stored in the inverted index.

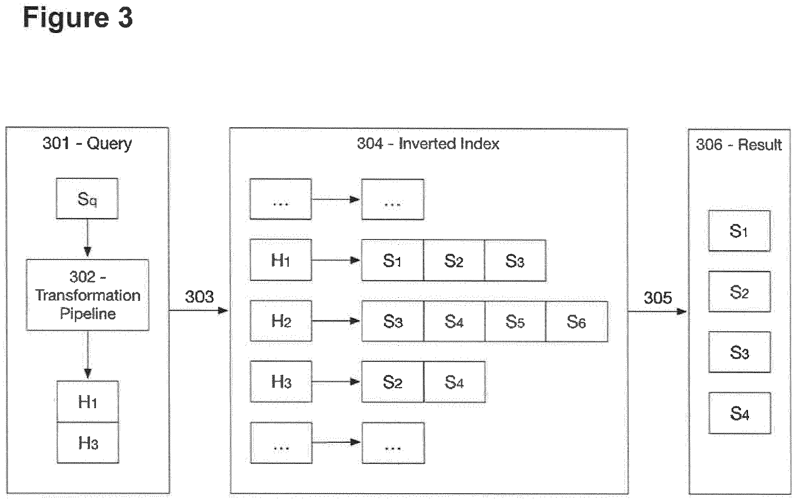

Figure 3 depicts an inverted index 304 in its simplest form. In this example, six sequences of tuples S1, S2, S3, S4, S5 and S6 have been indexed. Three segment hash sums H1, H2, H3 have been extracted by the transformation process from these six sequences of tuples. The inverted index highlight which segment hash sums belong to which sequence of tuples. When a query is performed 301, the sequence of tuple which forms the query Sq first goes through the transformation process 302. Here, two segment hash sums H 1, H3 are extracted from the query. When processing queries 303 the system first search for the segments H1, H3 in the terms of the inverted index. Then, the related postings lists which contain sequence identifiers are retrieved and duplicates are removed 305 in order to form the result set 306. The sequences of the result set S1, S2, S3, and S4 are guaranteed to share some common segments with the sequence of the query Sq. The more segments are shared, the more similar the sequences are assumed to be. In addition, simple distance measures such as MinHash or Jaccard Similarity can be used to assess how similar two sequences are.

In the context of a GPS tracker, several trackers are supposed to emit and transmit coordinates to the server. The resulting inverted index contains sub-trajectories, each of which points to a list of tracker identifiers. On the basis of this inverted index, it becomes possible to formulate queries which would correspond to specific trajectories. It is then possible to find all the sensors who emitted a sequences of coordinates that share some common sub-trajectories with the trajectory specified in the query.

## Claims

1. Method for segmenting and indexing features from multidimensional data, said method comprising the steps of:
inputting (201) a sequence of tuples in a transformation process,
mapping (204) the tuple sequence to a sequence of hash sums with a rolling hash function,
grouping (205) the sequence of tuple hash sums into a sequence of overlapping and contiguous sequences of n tuples hash sums,
mapping (206) of the resulting sequence of n tuples hash sums to a sequence of n-gram hash sums,
segmenting (207) the sequence of n-gram hash sums into chunks of tuples using a segmentation method selected in the group comprising at least one Content-Defined Chunking and Winnowing.

2. Method according to claim 1, wherein said hash function produces 32 bit or 64 bit integers.

3. Method according to claim 1 or 2, wherein said rolling hash function slides over hashed tuples in order to produce fingerprints.

4. Method according to any one of the preceding claims, wherein said segmenting method is configured to divide sequence of tuples into overlapping or non-overlapping chunks of fixed or variable sizes.

5. Method according to any one of the preceding claims, wherein said chunks are larger or equal to a minimal chunk size (min) and smaller or equal to a maximal chunk size (max).

6. Method according to any one of the preceding claims, wherein said predetermined condition is that said result of said first hash function (h) is a multiple of a predetermined divisor (d) (h mod d = 0).

7. Method according to any one of the preceding claims, comprising a preliminary step of normalization of said sequence of tuples before the first mapping step (2014).

8. Method according to the preceding claim, wherein said step of normalizing comprises replacing each tuple of said sequence of tuples by a normalized tuple representative of a subspace comprising said tuple.

9. Method according to any one of the preceding claims, comprising a preliminary step of extracting meaningful data only from a sequence of multidimensional data in order to build said sequence of tuples.

10. Method according to one of the preceding claims, wherein said sequence of tuples is a GPS trajectories and said tuples are GPS locations.

11. Method according to the preceding claim, wherein the longitude and latitude coordinates of each GPS location are replaced by the longitude and latitude coordinates of the center location of a user defined square in which said GPS location lies.

12. Method according to the preceding claim, wherein the longitude and latitude coordinates of each GPS location are replaced by the coordinates of a road network thanks to map matching.
